## Europäisches Patentamt
## European Patent Office
## Office européen des brevets

(19)

(11) Numéro de publication: **0 175 612**
**B1**

(12)

# FASCICULE DE BREVET EUROPEEN

(45) Date de publication du fascicule du brevet:
**11.05.88**

(51) Int. Cl.⁴: **B 23 Q 3/06,** B 23 Q 11/00

(21) Numéro de dépôt: **85401748.0**

(22) Date de dépôt: **09.09.85**

(54) **Dispositif d'usinage pourvu d'un presse-flan lié à l'outil et presse-flan pour un tel dispositif.**

(30) Priorité: **12.09.84 FR 8413995**

(43) Date de publication de la demande:
**26.03.86 Bulletin 86/13**

(45) Mention de la délivrance du brevet:
**11.05.88 Bulletin 88/19**

(84) Etats contractants désignés:
**BE CH DE GB IT LI NL SE**

(56) Documents cités:
**DE - A - 3 206 467**
**US - A - 1 804 507**
**US - A - 3 447 420**
**US - A - 3 499 641**
**US - A - 3 587 391**

(73) Titulaire: **AEROSPATIALE Société Nationale Industrielle, 37, Boulevard de Montmorency, F-75781 Paris Cédex 16 (FR)**

(72) Inventeur: **Matifas, René, 7 Les Baillets, F-80300 Albert (FR)**

(74) Mandataire: **Bonnetat, Christian et al, Cabinet PROPI Conseils 23 rue de Léningrad, F-75008 Paris (FR)**

ACTORUM AG

## Description

La présente invention concerne un dispositif d'usinage pourvu d'un presse-flan lié à l'outil, ainsi qu'un tel presse-flan. Quoique non exclusivement, elle est particulièrement appropriée à être mise en œuvre dans les dispositifs de fraisage et de détourage, et notamment dans les dispositifs destinés au détourage de pièces constituées d'un empilage de tôles. En conséquence, bien que cela ne puisse être considéré comme limitatif de sa portée, la présente invention sera expliquée ci-après en rapport avec cette dernière application.

On sait que, pour détourer une pluralité se tôles identiques, en un seule opération de fraisage, on fixe un empilage de telles tôles sur la table d'une fraiseuse, par exemple au moyen de rivets, de sorte que, après usinage et élimination des rivets, les tôles usinées peuvent être séparées, sans difficultés, les unes des autres en vue de leurs utilisations.

Les opérations consistent donc:

— à poser les tôles empilées, sur une table rigide et assurer une fixation provisoire à l'aide de rivets enserrant l'empilage et la table;

— à procéder à l'usinage;

— à éliminer les rivets d'assemblage provisoire après l'usinage.

Pour que le détourage s'effectue de façon satisfaisante, il est indispensable que les tôles dudit empilage soient fermement plaquées les unes contre les autres pour se comporter comme une pièce monolithique. Or, la fixation provisoire par rivets n'est pas suffisante pour assurer un placage correct des tôles les unes sur les autres sur toute leur surface.

Aussi, de façon connue, on prévoit un presse-flan lié à l'outil de détourage et chargé d'exercer une force de pression importante (par exemple de l'ordre d'une centaine de daN) au voisinage de la zone de l'empilage des tôles, en cours d'usinage.

Cependant un tel presse-flan provoque inévitablement des détériorations (rayures) de la surface de la tôle de l'empilage sur laquelle il presse; ces détériorations, dues notamment à l'insertion de copeaux entre le presse-flan et ladite tôle, sont d'autant plus importantes que la pression exercée par le presse-flan est plus grande. Cette tôle est donc sacrifiée et ne peut être utilisée, ce qui accroît le prix de revient des tôles détourées.

Pour tenter de remédier à cet inconvénient, on a proposé de revêtir ladite tôle d'une pellicule adhésive pelable; cependant, à ce jour, cette proposition n'a guère donné de résultats satisfaisants, car ladite pellicule se détériore elle-même, pour les mêmes raisons, en cours d'usinagne et ne peut donc remplir complètement son office.

L'objet de la présente invention est donc d'éliminer les problèmes de détérioration, par le presse-flan, de la surface de la pièce usinée.

A cette fin, selon l'invention, le dispositif destiné à l'usinage d'une pièce au moyen d'un outil rotatif monté dans un porte-outil et attaquant ladite pièce par sa surface d'usinage latérale, ledit dispositif comportant des moyens pour imprimer un mouvement de déplacement relatif entre ladite pièce à usiner et ledit porte-outil, ainsi qu'un presse-flan lié audit porte-outil, entourant l'outil et exerçant une pression locale sur une face plane ladite pièce dans le voisinage de la partie de celle-ci en cours d'usinage, est caractérisé en ce que ledit presse-flan est pourvu d'une chambre annulaire entourant ledit outil et obturée en regard de ladite pièce par une face plane traversée par une pluralité d'orifices, en ce que ladite chambre annulaire comporte des moyens de raccord à une source de fluide sous pression et en ce que ledit fluide sortant de la chambre annulaire à travers lesdits orifices crée entre la face plane de la pièce et la face plane de la chambre annulaire un film fluide de sustentation.

Ansi, un espace d'interface contenant le fluide sous pression est réalisé entre le presse-flan et la pièce, de sorte que l'on évite tout contact mécanique entre eux, ce qui supprime les détériorations mentionnées ci-dessus. La tôle extérieure de l'empilage est donc protégée et peut être utilisée comme les autres. De plus, la présence d'un film fluide entre le presse-flan et la pièce permet:

— d'améliorer le glissement entre ces deux éléments, par suppression des frottements mécaniques;

— d'éviter l'introduction de tout copeau d'usinage entre le presse-flan et la pièce à usiner, puisque le fluide sous pression s'échappant dudit espace d'interface vers l'extérieur exerce une poussée de rejet sur les copeaux qui se dirigeraient vers ledit espace;

— d'améliorer le refroidissement de l'outil, et donc ses performances, puisques le courant du fluide de sustentation baigne au moins en partie ledit outil et permet d'éliminer la chaleur engendrée par l'usinage.

De préférence, ledit fluide est du type lubrifiant, afin de permettre, de plus la lubrification de l'outil.

Avantageusement, le presse-flan est formé par un corps de révolution disposé coaxialement à l'outil et les orifices traversant la face plane de la chambre annulaire sont angulairement équirépartis sur un cercle coaxial audit outil. Ainsi, ledit outil, équipé de son presse-flan, peut attaquer·la pièce à usiner de tous côtés.

Cependant, il résulte de cette disposition, symétrique en rotation, que l'évidement usiné par l'outil dans ladite pièce se trouve en regard de certains desdits orifices d'évacuation du fluide sous pression, provenant de la chambre annulaire, de sorte que la formation du film de sustentation risque d'en être perturbée. Cette effet perturbateur est d'autant plus important que le volume de l'évidement varie constamment en fonction de l'usinage. Or, il est essentiel que l'effet de sustentation, c'est-à-dire l'effort de pression exercé par le presse-flan sur la pièce, soit constant, malgré la variation de volume de l'interface, engendrée par l'usinage.

Pour résoudre ce problème, on choisit la pression du fluide, ainsi que le diamètre et le nombre des orifices traversant la face plane de la chambre annulaire, de façon que la résistance opposée par lesdits orifices au passage du fluide soit importante par rapport à la résistance desdits moyens de raccord de la chambre à la source de fluide et par rapport à la résistance que le fluide de film de sustentation rencontre pour s'échapper latéralement de l'espace d'interface de sustentation.

On peut ainsi obtenir une distance sensiblement constante entre le presse-flan et la pièce et maintenir une pression, également sensiblement constante, pour le film de sustentation, malgré la suppression locale de l'interface dans la zone usinée.

L'alimentation en fluide, par exemple de l'huile soluble, peut être assurée par une pompe volumétrique alimentée depuis un réservoir à niveau minimal et maximal et un réseau de canalisations de section adaptée, complété par un filtre et un manomètre d'indication de pressions. On peut prévoir de recycler, après filtrage, le fluide s'échappant de l'espace d'interface.

Dans le cas où, de façon connue, la pièce à usiner est constituée d'un empilage de tôles assemblées par rivets sur un support rigide et épais, il est avantageux que les rivets soient maintenus en position par un matage de chacune de leurs extrémités et que les rivets soient extraits en les refoulant sous la pression d'un chasse-rivets de diamètre inférieur à celui du rivet pour éviter toute ovalisation des trous.

La présente invention concerne de plus un presse-flan pour un dispositif destiné à l'usinage d'une pièce au moyen d'un outil rotatif monté dans un porte-outil et attaquant ladite pièce par sa surface d'usinage latérale, ledit dispositif comportant des moyens pour imprimer un mouvement de déplacement relatif entre ladite pièce à usiner et ledit porte-outil, tandis que ledit presse-flan est lié audit porte-outil et exerce une pression sur une face plane de ladite pièce dans le voisinage de la partie de celle-ci en cours d'usinage, ledit presse-flan étant caractérisé en ce qu'il est pourvu d'une chambre annulaire entourant ledit outil et obturée en regard de ladite pièce par une face plane traversée par une pluralité d'orifices et en ce que ladite chambre annulaire comporte des moyens de raccord à une source de fluide sous pression, afin d'établir un film fluide de sustentation entre la face plane de la pièce et la face plane de la chambre annulaire.

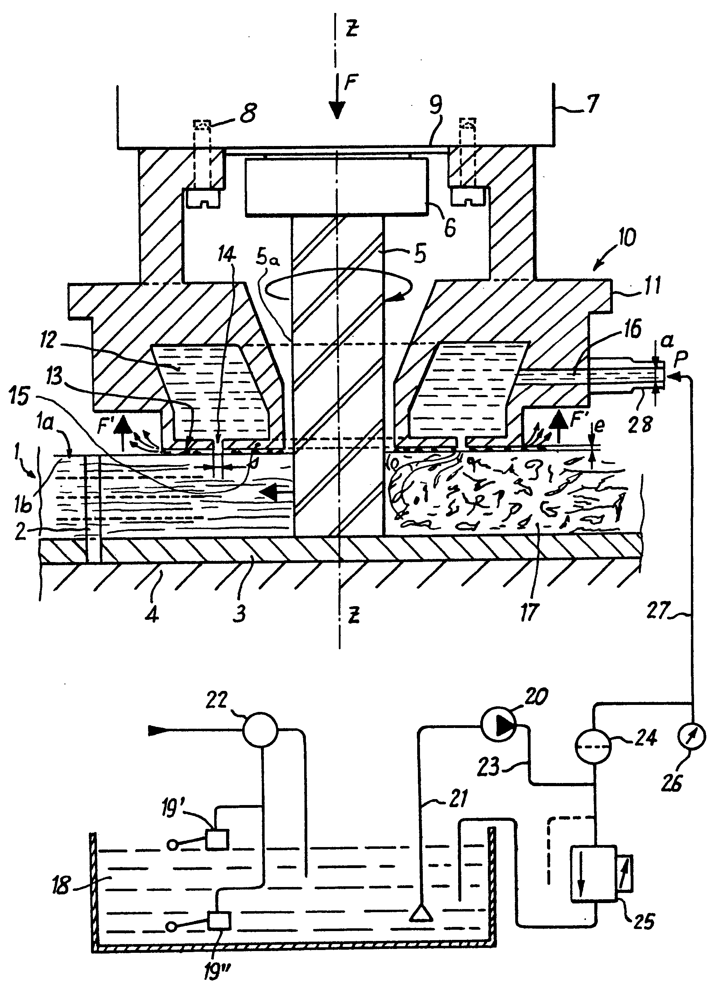

La figure unique du dessin annexé fera bien comprendre comment l'invention peut être réalisée.

Cette figure unique illustre, en coupe schématique, un exemple de mise en œuvre de l'invention, appliquée au détourage d'un paquet ou empilage de tôles.

Sur cette figure, la pièce 1 à détourer est constituée d'une pluralité de tôles individuelles 1a, 1b, ...empilées les unes sur les autres et devant être usinées simultanément. Pour la durée du détourage, la pièce 1 est fixée, à l'aide de rivets 2, sur un support rigide épais 3 porté lui-même sur la table 4 d'une fraiseuse et fixé à elle, par tous moyens connus et non représentés. Les rivets 2 assurent la fixation de la pièce 1 sur le support 3 et le solidarisation des tôles individuelles entre elles.

La fraiseuse de détourage comporte de plus une fraise 5 entraînée en rotation autour de son axe Z-Z et maintenue dans un porte-outil 6, lui-même monté dans une pièce 7. De façon connue et non représentée, la fraiseuse comporte de plus des moyens moteurs pour imprimer un mouvement relatif de déplacement entre la pièce 7 (et donc l'outil 5) et la table 4 (et donc la pièce 1). Ainsi, la fraise 5 peut présenter six degrés de liberté de déplacement par rapport à la pièce 1 et attaquer celle-ci par sa surface d'usinage latérale 5a.

On prévoit de plus un presse-flan à effet de sustentation, fixé à la pièce 7 par l'intermédiaire de vis 8 et centré par rapport à ladite pièce 7 grâce à un épaulement 9.

Ce presse-flan, portant la référence générale 10, est constitué d'un corps de révolution 11 dont l'axe est confondu avec l'axe Z-Z et à l'intérieur duquel est ménagée une chambre annulaire 12 coaxiale à l'outil 5.

Pour pouvoir ménager une interface de sustentation 13 avec la tôle la plus extérieure 1a de la pièce 1, la chambre 12 est, d'une part, pourvue d'orifice 14 pratiqués dans sa face plane 15 qui l'obture en regard de ladite pièce 1 et, d'autre part, reliée par un canal 16 et un raccord 28 à une source 18 à 27 de fluide hydraulique sous pression.

Ainsi, le fluide hydraulique sous pression pénétrant par le canal 16 dans la chambre annulaire 12 engendre un film de sustentation dans l'interface 13, en s'échappant à travers les orifices 14, puis à la périphérie de ladite interface.

Les orifices 14 sont équidistants de l'axe Z-Z et angulairement équirépartis autour de cet axe.

Si l'ensemble des éléments 5 à 10 est appliqué en direction des éléments 1 à 4 avec une force F, le film fluide de sustentation, d'épaisseur e, doit permettre à ces éléments 1 à 4 d'exercer une force de réaction F', d'amplitude égale, mais de sens opposé. Il est donc essentiel que le film fluide contenu dans l'interface 13 soit conservé malgré la constitution d'une chambre d'usinage 17 qui résulte du travail de l'outil 5 sur la pièce à usiner 1.

En effet, le film fluide étant détruit dans cette partie, il importe de définir une loi entre:

— la pression P du fluide dans le canal d'alimentation 16;

— la section d'entrée $a$ du canal d'alimentation 16;

— la section $s$ et le nombre $n$ des orifices 14 dans l'interface 13;

— la force d'application F, et

— l'épaisseur $e$ de l'interface 13.

L'expérience a montré que la section des orifices 14 doit être choisie de façon que la résistance hydraulique ainsi constituée soit importante vis-à-vis de la résistance de la tuyauterie d'amenée de fluide depuis la source jusqu'au presse-flan et également élevée vis-à-vis de la résistance hydraulique résultant de l'échappement latéral du fluide hors de l'interface.

Ceci conduit à choisir des orifices 14 de petit diamètre et une pression d'alimentation P élevée.

A titre d'exemple, on donne ci-après les caractéristiques d'un presse-flan du type décrit donnant toute satisfaction et destiné au détourage de tôles de duralumin rivées:

— diamètre extérieur du presse-flan 10:90 mm

— diamètre intérieur du presse-flan 10:52 mm

— surface active: environ 40 cm$^2$

— diamètre des orifices 14:2 mm

— nombre d'orifices 14:24 agencés de façon équidistante de l'axe Z-Z et répartis symétriquement

— surface totale des orifices 14:72 mm²
— pression du fluide: environ 10 bars
— nature du fluide: huile solubilisée dans l'eau
— débit: 85 l/mn
— force d'application: F environ 110 daN
— épaisseur d'interface: environ 0,3 mm.

La source de fluide hydraulique sous pression comporte essentiellemenr un bac 18 à détecteurs de niveau maximal 19' et minimal 19''. Le fluide est de l'huile soluble amenée à une pompe volumétrique 20 par une canalisation 21.

Le niveau de fluide dans le bac 18 est maintenus grâce à une pompe d'alimentation 22 commandée par les détecteurs de niveau 19' et 19''.

Le fluide sous pression issu de la pompe 20 est envoyé par la canalisation 23, d'une part à un filtre 24 et d'autre part à un limiteur de pression 25. Un manomètre 26 permet le contrôle de la pression dans la conduite 27 reliée à un canal 16.

Il doit être noté que les rivets d'assemblage 2 peuvent être avantageusement conformés comme rivets expansibles, ce qui permet de récupérer la pièce du surface 1a de l'empilage 1 puisque celle-ci ne se trouve aucunement endommagée, ni par les rayures grâce au dispositif conforme à l'invention, ni par des fraisures apparentes des rivets.

De plus, un tel type de rivet peut être aisément chassé alors que les rivets usuels doivent être percés avant leur élimination.

Il ressort de la présente description que l'invention peut être mise en œuvre aisément sur les machines de fraisage et de détourage existantes sans problème particulier à résoudre.

L'invention rend économique les opérations de détourage en ce sens que la première pièce peut être utilisée, ce qui n'était pas possible antérieurement.

Enfin sa mise en œuvre améliore le travail par le fait d'une meilleure lubrification et d'un meilleur refroidissement de l'outil.

**Revendications**

1. Dispositif destiné à l'usinage d'une pièce (1) au moyen d'un outil rotatif (5) monté dans un porte-outil (6) et attaquant ladite pièce (1) par sa surface d'usinage latérale (5a), ledit dispositif comportant des moyens pour imprimer un mouvement de déplacement relatif entre ladite pièce à usiner (1) et ledit porte-outil (6), ainsi qu'un presse-flan (10) lié audit porte-outil et exerçant une pression locale sur une face plane (1a) de ladite pièce (1) dans le voisinage de la partie de celle-ci en cours d'usinage, caractérisé en ce que ladit presse-flan (10) est pourvu d'une chambre annulaire (12) entourant ledit outil (5) et obturée en regarde de ladite pièce (1) par une face plane (15) traversée par une pluralité d'orifices (14), en ce que ladite chambre annulaire (12) comporte des moyens (16, 28) de raccord à une source (20) de fluide sous pression et en ce que ledit fluide sortant de la chambre annulaire (2) à travers lesdits orifices (14) entre la face plane (1a) de la pièce (1) et la face plane (15) de la chambre annulaire crée un film fluide de sustentation (13).

2. Dispositif selon la revendication 1, caractérisé en ce que, ledit fluide présentant des qualités de lubrification, le dispositif permet la lubrification de l'outil rotatif (5).

3. Dispositif selon la revendication 1, caractérisé en ce que le presse-flan (10) est formé par un corps de révolution (11) disposé coaxialement à l'outil (5) et les orifices (14) traversant la face plane (15) de la chambre annulaire (12) sont angulairement équipartis sur un cercle coaxial audit outil.

4. Dispositif selon la revendication 3, caractérisé en ce que la pression du fluide, ainsi que le diamètre et le nombre des orifices (14) traversant la face plane (15) de la chambre annulaire (12) sont choisis de façon que la résistance opposée par lesdits orifices au passage du fluide soit importante par rapport à la résistance desdits moyens de raccord (16, 28) de la chambre (12) à la source de fluide et par rapport à la résistance que le fluide du film de sustentation rencontre pour s'échapper latéralement de l'espace d'interface de sustentation.

5. Presse-flan (10) pour un dispositif destiné à l'usinage d'une pièce (1) au moyen s'un outil rotatif (5) monté dans un porte-outil (6) et attaquant ladite pièce (1) par sa surface d'usinage latérale (5a), le dit dispositif comportant des moyens pour imprimer un mouvement de déplacement relatif entre ladite pièce à usiner (1) et ledit porte-outil (6), tandis que ledit presse-flan est lié audit porte-outil (6) et exerce une pression locale sur une face plane (1a) de ladite pièce (1) dans le voisinage de la partie de celle-ci en cours d'usinage, caractérisé en ce qu'il est pourvu d'une chambre annulaire (12) entourant ledit outil (5) et obturée en regard de ladite pièce (1) par une face plane (15) traversée par une pluralité d'orifices (14) et en ce que ladite chambre annulaire (12) comporte des moyens (16, 28) de raccord à une source (20) de fluide sous pression, afin d'établir un film fluide (13) de sustentation entre la face plane (1a) de la pièce et la face plane (15) de la chambre annulaire.

**Patentansprüche**

1. Vorrichtung zur Bearbeitung eines Werkstückes (1) mit Hilfe eines in einem Werkzeughalter (6) angebrachten drehenden Werkzeuges (5), das mit seiner seitlichen Bearbeitungsfläche (5a) auf das Werkstück (1) einwirkt, wobei die Vorrichtung Mittel zum Bewirken einer relativen Verschiebungsbewegung zwischen dem zu bearbeitenden Werkstück (1) und dem Werkzeughalter (6) umfasst, ebenso einen mit dem Werkzeughalter verbundenen Spannstempel (10), der einen örtlichen Druck auf eine ebene Fläche (1a) des Werkstückes (1) in der Nähe des Bearbeitungsortes von diesem ausübt, dadurch gekennzeichnet, dass der Spannstempel (10) mit einer Ringkammer (12) um das Werkzeug (5) versehen und gegenüber dem Werkstück (1) durch eine ebene Fläche (15) abgegrenzt ist, die von einer Vielzahl von Öffnungen (14) durchdrungen ist, dass die Ringkammer (12) Mittel (16, 28) zum Verbinden mit einer Fluid-Druckquelle (20) aufweist und dass das aus der Ringkammer (2) durch die Öffnungen (14) zwischen die ebene Fläche (1a) des Werkstücks (1) und die ebene Fläche (15) der Ringkammer austretende Druckmittel einen Fluid-Schwebefilm (13) erzeugt.

2. Vorrichtung nach Anspruch 1, dadurch gekennzeichnet, dass die Vorrichtung aufgrund des Schmiereigenschaften aufweisenden Fluids die Schmierung des drehenden Werkzeuges (5) erlaubt.

3. Vorrichtung nach Anspruch 1, dadurch gekennzeichnet, dass der Pressstempel (10) durch ein koaxial mit dem Werkzeug (5) angeordnetes Drehteil (11) gebildet wird, und dass die die ebene Fläche (15) der Ringkammer (12) durchdringenden Öffnungen (14) unter gleichen Winkeln auf einem koaxialen Kreis um das Werkzeug verteilt sind.

4. Vorrichtung nach Anspruch 3, dadurch gekennzeichnet, dass der Druck des fluids ebenso wie der Durchmesser und die Anzahl der die ebene Fläche (15) der Ringkammer (12) durchdringenden Öffnungen (14) so gewählt sind, dass der von den Öffnungen (14) dem Durchgang des Fluids entgegengebrachte Widerstand gross im Vergleich zum Widerstand der Mittel (16, 28) zum Verbinden die Ringkammer (12) mit der Fluidquelle und im Vergleich zum Widerstand ist, auf den der Fluid-Schwebefilm beim seitlichen Austreten aus dem Raum des Schwebefilms trifft.

5. Spannstempel (10) für eine Vorrichtung zum Bearbeiten eines Werkstückes (1) mit Hilfe eines in einem Werkzeughalter (6) angebrachten drehenden Werkzeuges (5), das mit seiner seitlichen Bearbeitungsfläche (5a) auf das Werkstück (1) einwirkt, wobei die Vorrichtung Mittel zum Bewirken einer relativen Verschiebungsbewegung zwischen dem zu bearbeitenden Werkstück (1) und dem Werkzeughalter (6) umfasst, während der Spannstempel mit dem Werkzeughalter (6) verbunden ist und einen örtlichen Druck auf eine ebene Fläche (1a) des Werkstückes (1) in der Nähe des Bearbeitungsortes von diesem ausübt, dadurch gekennzeichnet, dass er mit einer Ringkammer (12) um das Werkzeug (5) versehen ist, wobei die Ringkammer (12) gegenüber dem Werkstück (1) durch eine ebene Fläche (15) abgegrenzt ist, die durch eine Vielzahl von Öffnungen (14) durchdrungen ist, und dass die Ringkammer (12) Mittel (16, 28) zum Verbinden mit einer Fluid-Druckquelle (20) aufweist, um einen Fluid-Schwebefilm (13) zwischen der ebenen Fläche (1a) des Werkstücks und der ebenen Fläche (15) der Ringkammer zu erzeugen.

## Claims

1. Device for machining a workpiece (1) by means of a rotating tool (5) mounted in a tool-holder (6) and attacking said workpiece (1) by its lateral machining surface (5a), said device comprising means for imparting a movement of relative displacement between said workpiece (1) and said tool-holder (6), as well as a blank-press (10) connected to said tool-holder and exerting a local pressure on a flat face (1a) of said workpiece (1) in the vicinity of that part thereof being machined, characterized in that said blank-press (10) is provided with an annular chamber (12) surrounding said tool (5) and obturated opposite said workpiece (1) by a flat face (15) traversed by a plurality of orifices (14), in that said annular chamber (12) comprises means (16, 28) for connection to a source (20) of fluid under pressure, and in that said fluid emerging from the annular chamber (12) through said orifices (14) creates between the flat face (1a) of the workpiece (1) and the flat face (15) of the annular chamber a fluid film for lift (13).

2. Device according to claim 1, characterized in that, said fluid presenting qualities of lubrification, the device makes the lubrication of the rotating tool (5) possible.

3. Device according to claim 1, characterized in that the blank-press (10) is formed by a body of revolution (11) disposed coaxially to the tool (5) and the orifices (14) passing through the flat face (15) of the annular chamber (12) are equally distributed angularly over a circle coaxial to said tool.

4. Device according to claim 3, characterized in that the pressure of the fluid, as well as the diameter and number of orifices (14) passing through the flat face (15) of the annular chamber (12) are selected so that the resistance opposed by said orifices to the passage of the fluid is high with respect to the resistance of said means (16, 28) for connecting the chamber (12) to the source of fluid and with respect to the resistance that the fluid of the lift film encounters to escape laterally from the interface space.

5. Blank-press (10) for a device for machining a workpiece (1) by means of a rotating tool (5) mounted in a tool-holder (6) and attacking said workpiece (1) by its lateral machining surface (5a), said device comprising means for imparting a movement of relative displacement between said workpiece (1) and said tool-holder (6), whilst the blank-press is connected to said tool-holder (6) and exerts a local pressure on a flat face (1a) of said workpiece (1) in the vicinity of that part thereof being machined, characterized in that it is provided with an annular chamber (12) surrounding said tool (5) and obturated opposite said workpiece (1) by a flat face (15) traversed by a plurality of orifices (14), and in that said annular chamber (12) comprises means (16, 28) for connection to a source (20) of pressurized fluid, in order to establish a fluide film for lift (13) between the flat face (1a) of the workpiece and the flat face (15) of the annular chamber.